# FASCICULE DE BREVET EUROPEEN

(11) **EP 0 657 278 B1**
(45) Date de publication et mention de la délivrance du brevet: **03.03.1999**
(21) Numéro de dépôt: 94402796.0
(22) Date de dépôt: 06.12.1994
(51) Int. Cl.: B32B 17/10, C03C 27/12

(54) **Procédé et dispositif pour la fabrication de vitrage feuilleté asymétrique par calandrage**
Verfahren und Vorrichtung zur Herstellung von asymmetrischen Verbundglasscheiben durch Kalendrierung
Method and apparatus for making asymmetric laminated glass by calendrage

(30) Priorité: 07.12.1993 FR 9314661
(43) Date de publication de la demande: 14.06.1995
(73) Titulaire: SAINT-GOBAIN VITRAGE, 92400 Courbevoie (FR); ASAHI GLASS COMPANY, Chiyoda-ku Tokyo 100 (JP)
(72) Inventeur: Didelot, Claude, F-60150 Thourotte (FR); Kadzialka, Edouard, F-60170 Ribecourt (FR); Ducret, Jean, F-60280 Clairoix (FR)
(74) Mandataire: Muller, René

(56) Documents cités:
- EP-A- 0 403 321
- FR-A- 2 607 436

## Description

L'invention est relative à la fabrication des vitrages feuilletés dits asymétriques formés d'un support rigide monolithique ou feuilleté et d'une feuille de matière plastique souple ayant les propriétés désirées, telles que des propriétés d'absorbeur d'énergie, des propriétés de surface comme résistance à la rayure, à l'abrasion, etc...

Des vitrages asymétriques comprenant une feuille en matière plastique formée d'au moins une couche de polyuréthane peuvent être utilisés en tant que vitrages de véhicule, notamment en tant que pare-brise, vitrages latéraux ou lunettes arrières de véhicules automobile, en tant que vitrages pour cokpit d'avion, en tant que vitrages pour train ou encore en tant que vitrages bâtiment.

L'assemblage du support rigide avec la feuille souple pour constituer le vitrage feuilleté s'effectue généralement par un pressage préliminaire du support avec la feuille par calandrage, suivi d'un cycle d'autoclave mettant en jeu la température et la pression qui améliore l'adhésion entre les éléments constitutifs et assure ainsi un assemblage définitif.

On a déjà proposé dans la publication de brevet européen 0 015 209 un dispositif de calandrage comprenant des moyens inférieurs de pressage, notamment une série de galets disposés les uns à côté des autres, des moyens supérieurs de pressage comprenant un rouleau presseur cylindrique souple, s'étendant sur une longueur au moins égale à la largeur des éléments à assembler, ce rouleau souple étant maintenu suivant la courbure désirée par des moyens supérieurs s'appuyant sur lui, l'ensemble des éléments de pressage étant monté sur un cadre pivotant.

La feuille souple qui est assemblée avec le support rigide par mise en oeuvre de ce dispositif doit se présenter sous la forme d'un ruban continu pour pouvoir être maintenue dans la position désirée pour l'assemblage qui s'effectue au défilé.

Malheureusement, dans ce type d'assemblage au défilé, il n'est pas possible de présenter les supports rigides à revêtir les uns à la suite des autres sans intervalles de séparation, surtout lorsqu'il s'agit de vitrages cintrés dans le sens du défilement qui correspond généralement à la courbure dans le sens de la longueur du vitrage. Dans ce cas, l'opération d'assemblage utilise un basculement du cadre pivotant au fur et à mesure de l'avance du vitrage entre les éléments de pressage, afin d'assurer un pressage sensiblement perpendiculaire à la surface du vitrage durant toute l'opération.

La position du cadre pivotant en sortie d'un vitrage est généralement symétrique, par rapport à un plan vertical, de la position du cadre de basculement en entrée d'un vitrage, de sorte qu'entre la sortie d'un vitrage et l'entrée du vitrage suivant, le cadre doit basculer dans l'autre sens pour revenir à sa position de début d'assemblage.

Il est donc nécessaire de séparer deux supports rigides consécutifs d'un intervalle au moins égal à la distance qui correspond à l'avance des vitrages durant le temps de basculement en retour du cadre. Cet intervalle correspond donc aussi à une perte de matière en feuille souple.

En outre, dans le cas de vitrages automobiles, la surface développée du vitrage présente une forme approximativement trapézoïdale, ce qui entraîne d'autres pertes en feuille souple, en particulier toute la partie comprise entre les contours du trapèze que l'on appelle primitif et le rectangle dans lequel le primitif est inscrit.

Les différentes pertes de matière peuvent au total constituer 30 % environ de la surface de la feuille.

Dans la publication EP-A-0 403 321, sur laquelle repose le préambule des revendications indépendantes 1 et 10, on a proposé un procédé pour l'assemblage des vitrages asymétriques formés d'un support rigide et d'une feuille souple, à partir d'un ruban continu, qui réduit fortement les pertes de matière en feuille souple.

Selon ce procédé, on présente au dispositif d'assemblage un ruban continu formé d'un film souple support, en papier, ou en une matière plastique peu onéreuse, sur lequel on a placé des primitifs préparés ou découpés au préalable à la forme géométrique désirée, ces primitifs étant disposés régulièrement et de façon séparée les uns des autres. Généralement, la distance de séparation entre deux primitifs est au moins égale à celle correspondant à l'avance du film durant le temps mis par le dispositif d'assemblage pour passer de la position sortie d'un vitrage à la position entrée du vitrage suivant.

Le temps mis par le dispositif pour changer de position correspond au temps de basculement en retour lorsque le dispositif est équipé d'un cadre basculant

Pour constituer ce ruban souple préfabriqué, plusieurs variantes sont envisagées.

Dans une première réalisation, on peut fabriquer la feuille de matière plastique par format en utilisant en tant que support de formation un lit continu formé de trapèzes disposés tête bêche. Lorsqu'on retire la feuille de matière plastique du support de formation, on obtient directement les primitifs trapézoïdaux. Ceux-ci sont alors placés régulièrement et avec une même orientation sur le film support pour former le ruban préfabriqué qui sera utilisé pour l'assemblage ultérieur par calandrage.

Dans une variante, on fabrique la feuille souple en utilisant un support de formation continu, en verre, ou en métal, comme décrit par exemple dans les publications des brevets français 2 230 487, ou 2 549 414, ou sur un support souple tendu comme décrit par exemple dans la publication de brevet français 2 480 669. La feuille de matière plastique continue ainsi fabriquée est découpée en primitifs après avoir été retirée du support de formation ou découpée avec le support lui-même lorsque celui-ci est un support souple tendu et qu'il fait partie de la feuille fabriquée qui est alors une feuille composite. Les primitifs obtenus sont alors disposés comme précédemment de façon régulière et selon une même orientation sur le film support afin de constituer le ruban préfabriqué qui sera utilisé pour l'assemblage.

Le procédé décrit ci-dessus permet donc de limiter les pertes de matière. Il nécessite toutefois la fabrication au préalable d'un ruban continu à partir d'un film support souple et des primitifs découpés. Après l'assemblage le film support est généralement perdu pour le procédé.

L'invention propose un nouveau procédé pour l'assemblage par calandrage d'un primitif en matière plastique souple avec un support rigide qui comme dans le procédé décrit ci-dessus réduit fortement les pertes en matière plastique souple et qui en outre utilise un support réutilisable en forme de bande sans fin pour amener les primitifs au dispositif d'assemblage.

Selon le procédé, on dépose le primitif sur une bande transporteuse sans fin, disposée en amont de l'axe de pressage, on amène le primitif par cette bande à proximité de l'axe de pressage, au-dessus du support à recouvrir qui se déplace à la même vitesse que le primitif, on libère l'extrémité avant du primitif puis progressivement tout le primitif pour l'amener au contact du support à recouvrir juste avant l'axe de pressage, et au fur et à mesure que l'ensemble support-primitif passe dans l'axe de pressage.

La libération de l'extrémité avant du primitif est selon une réalisation de l'invention obtenue par le passage de la bande sans fin autour d'une courbure convexe de faible rayon, disposée juste en amont de l'axe de pressage. Les caractéristiques de la courbure convexe autour de laquelle passe la bande sans fin, en particulier la valeur du rayon de courbure assurant la libération du primitif dépendent notamment de la nature de la force d'adhésion du primitif avec la bande sans fin, de la géométrie du primitif, de son épaisseur qui est liée au poids. On peut considérer généralement que le rayon de courbure doit être inférieur à 10 mm, de préférence inférieur à 5 mm et avantageusement compris entre 1 mm et 5 mm lorsqu'il s'agit d'un primitif en matière plastique formé d'au moins une couche de polyuréthane comme décrit précédemment, ayant la géométrie et les dimensions approximatives d'un primitif pour pare-brise de véhicule automobile, et d'environ 0,5 à 1,5 mm d'épaisseur.

La force d'adhésion du primitif avec la bande transporteuse est déterminée d'une part en limite inférieure par la force nécessaire au maintien du primitif au contact de la bande transporteuse alors même qu'il est amené à l'emplacement de l'assemblage, en étant disposé sous la bande transporteuse , cette force d'adhésion devant être alors supérieure au poids du primitif et d'autre part en limite supérieure à la force nécessaire à la libération du primitif, au moins son extrémité avant, lors du passage de la bande transporteuse autour du faible rayon de courbure disposé juste en amont de l'axe de passage.

L'adhésion entre la bande transporteuse et le primitif peut être obtenue par différents moyens. Ces moyens peuvent être des moyens créant des forces électrostatiques, des moyens d'aspiration, des moyens d'adhésion chimique, selon la nature et le type de bande sans fin utilisé. Lorsqu'il s'agit d'une bande non poreuse vis-à-vis de l'air, I'adhésion est avantageusement une adhésion due à des forces électrostatiques. Ainsi on crée une adhésion électrostatique entre la bande sans fin et le primitif sur le parcours correspondant au transport du primitif jusqu'à l'emplacement de calandrage.

Un des avantages de l'adhésion électrostatique est que cette adhésion peut être créée ou au contraire détruite à volonté sans altération de l'état de surface, et de la bande transporteuse et du primitif.

Selon une caractéristique du procédé selon l'invention, on dépose le primitif sur la bande sans fin et on crée une adhésion électrostatiquement juste après.

En variante selon l'invention, la bande sans fin utilisée peut être une toile poreuse à l'air. Elle peut alors être associée à des moyens de dépression ou d'aspiration afin d'assurer le maintien du primitif au contact de la bande au cours de son transfert jusqu'à l'emplacement de calandrage.

L'adhésion entre le primitif et une bande sans fin poreuse peut aussi être une adhésion due à des forces électrostatiques. Il peut également être prévu de combiner une adhésion électrostatique à des forces de maintien par aspiration.

Comme décrit précédemment, la libération du primitif, en particulier de la partie avant, peut être obtenue par passage de la bande autour d'une courbure convexe de faible rayon.

D'autres moyens permettant la libération à l'emplacement désiré juste en amont de l'axe de pressage peuvent être prévus. Ces moyens dépendent évidemment du type d'adhésion utilisée pour le maintien du primitif sur la bande sans fin. Ces moyens peuvent consister en la suppression des moyens procurant le maintien du primitif au contact de la bande.

Lorsque l'adhésion est due à des forces électrostatiques, la libération du primitif peut comme prévu précédemment, s'opérer par passage de la bande sans fin autour d'une courbure convexe de faible rayon ou en variante en supprimant les forces d'attraction électriques à l'aide de moyens telle qu'une barre de déchargement électrostatique ou encore en combinant ces moyens de libération mécaniques et électriques.

Lorsque la bande sans fin est poreuse à l'air, d'autres moyens de libération peuvent être utilisés seuls ou en combinaison avec les moyens décrits précédemment. Ces moyens peuvent être une modification des forces de pression qui s'exercent sur les deux faces du primitif, par exemple, une suppression d'une aspiration, ou un soufflage d'air allant de la bande sans fin vers le primitif.

L'invention concerne aussi un dispositif pour l'assemblage par calandrage des vitrages asymétriques formés d'un support, en particulier un support rigide et d'une feuille de matière plastique.

Le dispositif selon l'invention est une ligne d'assemblage qui comprend une calandreuse munie de moyens supérieurs de pressage et de moyens inférieurs de pressage montés de préférence sur un cadre pivotant, un convoyeur pour amener le support à recouvrir à la calandreuse, des moyens pour amener le primitif en matière plastique à assembler au support juste en amont de l'axe de pressage et le déposer sur le support, au fur et à mesure de son engagement dans l'axe de pressage, ces moyens comprenant une bande transporteuse sans fin et des moyens pour libérer l'extrémité avant du primitif à l'emplacement désiré, un convoyeur aval pour récupérer l'assemblage réalisé. Le dispositif comporte encore des moyens procurant à la bande sans fin des propriétés pour le maintien ou l'adhésion du primitif, des moyens de synchronisation du mouvement de la bande sans fin et du mouvement du convoyeur pour le support à revêtir, afin d'amener le primitif et le support à revêtir simultanément et à la même vitesse à l'axe de pressage.

Les moyens pour libérer le primitif de la bande transporteuse sont selon une caractéristique de l'invention une courbure à faible rayon autour de laquelle passe la bande sans fin. Les moyens pour libérer le primitif peuvent être aussi d'autres moyens permettant de supprimer l'adhésion du primitif avec la bande sans fin. Ces moyens peuvent être mécaniques et/ou électriques. A l'emplacement où s'effectue la libération du primitif, la bande présente un angle d'enroulement α (ou angle de retour) généralement supérieur à 90° et de préférence supérieur à 135° de façon à faciliter la libération du primitif et pour ne pas limiter la zone d'action utile de la calandreuse, en particulier l'inclinaison du cadre pivotant.

La calandreuse est par exemple celle décrit dans la publication de brevet européen EP-A-0 015 209 ou dans la publication de brevet européen EP-A-0 189 345.

D'autres avantages et caractéristiques de l'invention apparaîtront dans la description suivante faite en relation avec la figure.

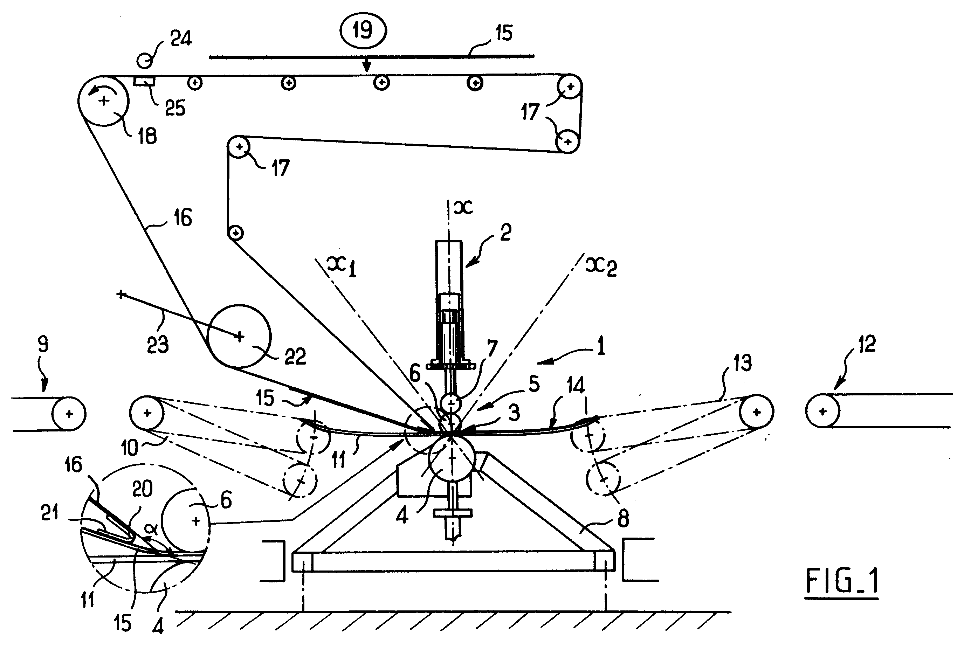

La figure 1 représente schématiquement une ligne d'assemblage selon l'invention qui utilise une bande sans fin pour amener le primitif sur le support à revêtir juste en amont de l'axe d'assemblage.

Le dispositif d'assemblage comprend une calandreuse 1 telle que celle décrite par exemple dans la publication de brevet européen EP-A-0 015 209 déjà cité. La calandreuse 1 comprend un cadre 2 pivotant autour d'un axe horizontal x1 disposé transversalement par rapport à la ligne d'assemblage. Ce cadre pivotant 2 porte des moyens de pressage inférieurs 4 constitués d'une série galets, des moyens de pressage supérieurs 5 comprenant un rouleau presseur cylindrique souple 6 et une série de galets supérieurs 7 s'appuyant sur lui pour lui donner la courbure désirée, ici la courbure transversale des vitrages à assembler.

Les moyens de pressage peuvent être commandés suivant le principe de la calandreuse dite flottante selon lequel les forces de pression agissant sur les galets supérieurs s'équilibrent avec les forces de pression agissant sur les galets inférieurs grâce à une mise en communicatin des chambres de pression des vérins agissant sur les galets supérieurs avec les chambres de pression des vérins agissant sur les galets inférieurs. Une telle calandreuse est décrite dans la publication de brevet européen EP-A-0 189 345. Le cadre mobile est monté sur un bâti 8.

Le dispositif de calandrage est disposé entre un convoyeur amont à courroie 9 formé de plusieurs parties, dont une partie d'extrémité 10, qui amène le support à recouvrir, généralement une feuille de verre bombée 11 et un convoyeur aval 12 formé de plusieurs parties, dont une d'extrémité 13, qui réceptionne et éloigne les supports recouverts constituant les assemblages ou vitrages feuilletés 14. La partie d'extrémité 10 du convoyeur amont et la partie d'extrémité 13 du convoyeur aval peuvent être plus ou moins inclinées par rapport à l'horizontale, comme les positions représentées en traits mixtes, de façon à amener et à réceptionner le bord avant des supports à revêtir 11 sensiblement perpendiculairement au cadre pivotant sans qu'il soit nécessaire d'incliner fortement celui-ci.

Le primitif 15 à assembler avec le support 11 est amené à l'axe de pressage par une bande transporteuse sans fin 16 maintenue tendue par passage autour de rouleaux 17, et entraînée par un rouleau moteur 18.

La bande transporteuse sans fin passe à un poste 19 où s'effectue la dépose du primitif sur la bande par le dessus. Elle passe aussi en un emplacement disposé à proximité de l'entrée de l'axe de pressage et prévu pour la libération du primitif. Pour ce faire, la bande sans fin 16 passe en cet emplacement autour d'une courbure convexe de faible rayon 20, par exemple de 3 mm, formée par la base arrondie d'une pièce-guide métallique 21 en V. Cette pièce-guide est reliée électriquement à la terre de façon à éliminer au moins partiellement les charges électriques portées par la bande sans fin. Cette pièce-guide fait alors office de barre de décharge. A l'emplacement où s'effectue la dépose du primitif, en amont de l'axe de pressage, la bande présente un angle α d'enroulement autour de la base de la pièce-guide avantageusement supérieur à 90° et de préférence supérieur à 135° de façon à assurer le détachement du primitif de la bande sans fin et pour pouvoir libérer la zone d'action du cadre pivotant de la calandreuse.

La tension de la bande à la valeur désirée est assurée par un rouleau 22 dont la position peut être réglée à l'aide d'un bras articulé 23. A la sortie du poste de dépose du primitif, la bande passe au-dessous et à environ 10 mm, d'une électrode de charge 24 destinée à créer des forces d'adhésion électrostatiques entre la bande et le primitif. Une électrode de charge convenable est par exemple une électrode de charge commercialisée par la Société française ELCOWA, qui peut être alimentée en courant électrique à haute tension, comprise entre 9000 et 15000 Volts, qui s'étend sur toute la largeur de la bande sans fin. Une plaque de métal 25 reliée à la terre peut être disposée de l'autre côté de la bande sans fin, à son son contact, et en face de l'électrode de charge 24

La dépose du primitif sur la bande est réalisée par des moyens non représentés, tel un bras d'automate. La dépose du primitif peut s'effectuer au défilement de la bande. En variante, la dépose pourrait s'effectuer lorsque la bande est dans une position d'arrêt à condition qu'au moment de l'arrêt ne s'effectue pas un assemblage d'un autre primitif avec le support au poste d'assemblage.

Le dispositif est muni de moyens de repère, de détecteurs, et de moyens de synchronisation (non représentés) pour que le support à recouvrir et le primitif arrivent en même temps à l'entrée de l'axe de pressage.

Le dispositif peut comporter encore des moyens de contrôle et de régulation (non représentés) pour éviter le dévirage de la bande sur les rouleaux.

La bande sans fin est choisie dans cette réalisation en un matériau susceptible d'adhérer électrostatiquement avec le primitif, et suffisamment souple pour pouvoir passer autour d'une courbure de faible rayon. Cette bande peut être en un polyuréthane à surface lisse côté transport. L'épaisseur de la bande est par exemple de 0,7 mm.

Le dispositif fonctionne de la manière suivante. La bande défilant de manière continue, le bras d'un automate disposé au poste de dépose, place le primitif 15 sur la bande sans fin dans la position désirée par rapport à la position de l'assemblage ultérieur. La bande et le primitif passent sous l'électrode de charge 24 et il se crée une adhésion électrostatique entre lui et la bande sans fin.

Un ou plusieurs détecteurs repèrent la position du primitif. De manière synchronisée, le support à recouvrir par la feuille de verre est entraîné par le convoyeur vers la calandreuse. La feuille de verre et le primitif arrivent en même temps dans la zone disposée juste en amont de l'axe de pressage. Lorsque l'extrémité avant du primitif arrive à l'emplacement de la pièce-guide métallique 21 en V, au passage de la base du V, I'extrémité avant du primitif se détache pour venir, en tombant, au contact de l'extrémité avant de la feuille de verre qui se déplace à la même vitesse que le primitif. Le cadre mobile étant incliné suivant l'axe x₁ vers le convoyeur amont, les deux éléments constitutifs du vitrage sont saisis, juste après leur mise en contact par les moyens de pressage. Au fur et à mesure de l'avance du vitrage dans la calandreuse, le primitif se détache de la bande continue en étant tiré par le rouleau de pressage supérieur moteur 6 pour finalement être assemblé avec la feuille de verre.

On peut noter que pour assurer le fonctionnement du dispositif selon l'invention, il suffit que l'extrémité amont du primitif se détache de la bande sans fin au passage de la pièce-guide en V.

Une fois que cette partie amont est passée dans l'axe de la calandreuse, le rouleau de pressage supérieur exerce une traction sur le primitif ce qui provoque la libération de la partie suivante du primitif.

Au cours de l'assemblage, le support est entraîné par les galets inférieurs 4 et le primitif par le rouleau presseur souple 6 qui sous l'action des galets supérieurs 7 le presse en tous points sur le support. En même temps qu'il est assemblé avec le support à recouvrir, le primitif se détache de la bande continue.

Le cadre pivote pour atteindre la position verticale correspondant à la moitiée de l'opération d'assemblage comme représenté sur la figure 1, selon l'axe x puis le cadre mobile s'incline vers le convoyeur aval, progressivement jusqu'à la position repérée selon l'axe x₂, pour la dernière partie de l'opération d'assemblage. Le vitrage fabriqué est réceptionné par le convoyeur aval. Lorsque le vitrage sort du dispositif, le cadre mobile bascule pour retrouver la position suivant l'axe x₁ du début de l'assemblage.

A la sortie du dispositif d'assemblage, les parties débordantes des primitifs sont découpées aux contours de la feuille de verre.

Le procédé et le dispositif selon l'invention sont utilisés avec avantage pour l'assemblage des vitrages feuilletés dits asymétriques formés d'un support monolithique ou feuilleté en verre et/ou en matière plastique et une feuille souple de matière plastique.

Le support est généralement constitué d'une feuille de verre recuite ou trempée alors que la feuille de matière plastique souple est généralement constituée d'au moins une couche de polyuréthane. La feuille de matière plastique peut comprendre une couche de polyuréthane ayant des propriétés d'absorbeur d'énergie et d'une couche de polyuréthane ayant des propriétés de surface telles que la résistance à la rayure, à l'abrasion, aux agents extérieurs, avantageusement en polyuréthane thermodurcissable (ou réticulé), cette dernière couche étant disposée au contact de la bande sans fin. La couche opposée destinée à venir au contact du support présente des propriétés adhésives avec le support. Cette couche adhésive peut être la couche ayant des propriétés d'absorbeur d'énergie ou une couche adhésive supplémentaire en polyuréthane thermoplastique par exemple.

De tels vitrages et feuilles de polyuréthane sont décrits par exemple dans les publications de brevets FR-A-2 398 606, EP-0 190 517, EP-A-0 132 198, JP-A-86 171241 et JP-A-86 281118.

Le vitrage feuilleté peut ensuite subir un cycle d'assemblage définitif, par exemple un cycle d'autoclave.

## Revendications

1. Procédé pour l'assemblage d'un primitif en matière plastique (15) avec un support (11) notamment un support rigide en vue de former un vitrage feuilleté, dans lequel on amène le primitif (15) au contact du support (11) à revêtir et on presse l'ensemble par passage entre les rouleaux d'une calandreuse (1), **caractérisé en ce que** le primitif est amené à l'axe de pressage au-dessus du support à recouvrir par une bande transporteuse sans fin (16), qui se déplace à la même vitesse que le support à recouvrir, et que son extrémité avant puis tout le primitif est libéré progressivement de la bande transporteuse sans fin (16) pour être amené au contact du support juste avant l'axe de pressage, au fur et à mesure que l'ensemble passe dans l'axe de pressage.

2. Procédé selon la revendication 1, **caractérisé en ce que** la libération du primitif s'opère par passage de la bande sans fin autour d'une courbure convexe de faible rayon.

3. Procédé selon la revendication 2, **caractérisé en ce que** le rayon de la courbure convexe est inférieur à 10 mm et de préférence inférieur à 5 mm.

4. Procédé selon la revendication 1 à 3, **caractérisé en ce que** la libération du primitif s'opère par suppression des moyens (24) procurant le maintien du primitif au contact de la bande sans fin.

5. Procédé selon une des revendications 1 à 3, **caractérisé en ce que** le primitif est maintenu au cours de son transport sur la bande sans fin par des forces électrostatiques.

6. Procédé selon la revendication 5, **caractérisé en ce que** la libération du primitif s'opère par passage de la bande sans fin autour d'une courbure convexe de faible rayon et à proximité de moyens de décharge électrostatique.

7. Procédé selon une des revendications 1 à 6, **caractérisé en ce que** le primitif comprend au moins une couche de polyuréthane.

8. Procédé selon la revendication 6, **caractérisé en ce que** le primitif comprend au moins une couche de polyuréthane ayant des propriétés d'absorbeur d'énergie et une couche de polyuréthane ayant des propriétés de surface, cette couche étant au contact de la bande sans fin, la couche opposée destinée à venir au contact du support présentant des propriétés adhésives avec le support, cette couche pouvant être la couche ayant des propriétés d'absorbeur d'énergie ou une couche adhésive supplémentaire notamment en polyuréthane thermoplastique.

9. Procédé selon une des revendications 1 à 5, **caractérisé en ce que** le support est en verre.

10. Dispositif pour l'assemblage d'un primitif en matière plastique (15) avec un support (11), notamment un support rigide par calandrage, comprenant une calandreuse (1) comprenant des moyens supérieurs de pressage (5) et des moyens inférieurs de pressage (4) formant entre eux un axe de pressage, un convoyeur amont (9) pour amener le support à recouvrir à la calandreuse, et un convoyeur aval (13) pour récupérer l'assemblage à la sortie de la calandreuse, ledit dispositif étant **caractérisé en ce qu'**il comprend une bande transporteuse sans fin (16) pour amener le primitif sur le support à recouvrir en amont de l'axe de pressage, au fur et à mesure de son engagement dans l'axe de pressage, des moyens assurant le maintien du primitif au contact de la bande sans fin pour son transport jusqu'à la calandreuse, et des moyens (20) pour libérer le primitif juste en amont de l'axe de pressage.

11. Dispositif selon la revendication 10, **caractérisé en ce qu'**il comprend des moyens (24) susceptibles de créer des forces d'adhésion électrostatiques entrer la bande sans fin et le primitif qu'elle doit transporter.

12. Dispositif selon la revendication 11, **caractérisé en ce que** les moyens susceptibles de créer des forces d'adhésion électrostatiques comprennent une électrode de charge (24).

13. Dispositif selon une des revendications 11 ou 12, **caractérisé en ce que** les moyens pour libérer le primitif juste en amont de l'axe de pressage comprennent une courbure convexe de faible rayon autour de laquelle passe la bande sans fin.

14. Dispositif selon la revendication 13, **caractérisé en ce que la** courbure convexe présente un rayon inférieur à 10 mm et de préférence inférieur à 5 mm.

15. Dispositif selon une des revendications 13 ou 14, **caractérisé en ce que** la courbure convexe est procurée par la base d'une pièce-guide métallique en forme de V (21).

16. Dispositif selon la revendication 15, **caractérisé en ce que** la pièce-guide métallique (21) est déchargée électriquement en étant reliée à la terre.

## Claims

1. Process for the assembly of a plastics material blank (15) with a support (11), particularly a rigid support, with a view to the formation of a laminated glazing, in which the blank (15) is brought into contact with the support (11) to be coated and the assembly is pressed by passage between the rollers of a calender (1), characterized in that the blank is brought to the pressing axis above the support to be covered by an endless conveyor belt (16), which travels at the same speed as the support to be covered and that its front end and then the entire blank is progressively freed from the endless conveyor belt (16) in order to be brought into contact with the support just in front of the pressing axis, as the assembly passes into the pressing axis.

2. Process according to claim 1, characterized in that the release of the blank takes place by the passage of the endless belt around a small radius, convex curvature.

3. Process according to claim 2, characterized in that the convex curvature radius is below 10 mm and preferably below 5 mm.

4. Process according to claims 1 to 3, characterized in that the release of the blank takes place by the elimination of means (29) maintaining the blank in contact with the endless belt.

5. Process according to one of the claims 1 to 3, characterized in that, during its conveying on the endless belt, the blank is held by electrostatic forces.

6. Process according to claim 5, characterized in that the blank is released by the passage of the endless belt around a small radius, convex curvature and in the vicinity of electrostatic discharge means.

7. Process according to one of the claims 1 to 6, characterized in that the blank has at least one polyurethane layer.

8. Process according to claim 6, characterized in that the blank has at least one polyurethane layer with energy absorbing properties and a polyurethane layer having surface properties, said layer being in contact with the endless belt, the opposite layer intended to come into contact with the support having adhesive properties with the support, whereby said layer can be the layer having energy absorbing properties or a supplementary adhesive layer, more particularly of thermoplastic polyurethane.

9. Process according to one of the claims 1 to 5, characterized in that the support is of glass.

10. Apparatus for the assembly of a plastics material blank (15) with a support (11), particularly a rigid support, by calendering comprising a calender (1) having upper pressing means (5) and lower pressing means (4) forming between them a pressing axis, an upstream conveyor (9) for bringing the support to be covered to the calender and a downstream conveyor (13) for recovering the assembly on leaving the calender, said apparatus being characterized in that it comprises an endless conveyor belt (16) for bringing the blank onto the support to be covered upstream of the pressing axis, during its engagement in the pressing axis, means maintaining the blank in contact with the endless belt for its conveying up to the calender and means (20) for releasing the blank just upstream of the pressing axis.

11. Apparatus according to claim 10, characterized in that it comprises means (24) able to create electrostatic adhesive forces between the endless belt and the blank which it has to convey.

12. Apparatus according to claim 11, characterized in that the means able to create electrostatic adhesion forces incorporate a charging electrode (24).

13. Apparatus according to one of the claims 11 or 12, characterized in that the means for releasing the blank just upstream of the pressing axis have a small radius, convex curvature about which passes the endless belt.

14. Apparatus according to claim 13, characterized in that the convex curvature has a radius below 10 mm and preferably below 5 mm.

15. Apparatus according to one of the claims 13 or 14, characterized in that the convex curvature is brought about by the base of a metallic, V-shaped guide part (21).

16. Apparatus according to claim 15, characterized in that the metallic guide part (21) is electrically discharged by being connected to earth.

## Patentansprüche

1. Verfahren zum Verbinden eines Kunststoffrohteils mit einem Träger, insbesondere einem starren Träger, um eine Verbundverglasung zu bilden, in welchem das Rohteil mit dem zu beschichtenden Träger in Berührung gebracht und die Einheit mittels Durchlauf durch die Walzen eines Kalanders zusammengepreßt wird, **dadurch gekennzeichnet, daß** das Rohteil in der Preßachse auf den zu beschichtenden Träger von einem endlosen Förderband gebracht wird, das sich mit derselben Geschwindigkeit wie der zu beschichtende Träger fortbewegt, und sein vorderes Ende und anschließend das gesamte Rohteil fortschreitend freigegeben wird, um unmittelbar vor der Preßachse entsprechend dem Maße, in welchem die Einheit in diese gelangt, mit dem Träger in Berührung gebracht zu werden.

2. Verfahren nach Anspruch 1, **dadurch gekennzeichnet, daß** die Freigabe des Rohteils durch Laufen des endlosen Förderbandes um eine konvexe Biegung mit kleinem Radius erfolgt.

3. Verfahren nach Anspruch 2, **dadurch gekennzeichnet, daß** der Radius der konvexen Biegung kleiner als 10 mm und vorzugsweise kleiner als 5 mm ist.

4. Verfahren nach Anspruch 1 bis 3, **dadurch gekennzeichnet, daß** die Freigabe des Rohteils durch Entfernung der Mittel erfolgt, durch welche das Rohteil mit dem endlosen Förderband in Berührung gehalten wird.

5. Verfahren nach einem der Ansprüche 1 bis 3, **dadurch gekennzeichnet, daß** das Rohteil während seines Transports auf dem endlosen Förderband von elektrostatischen Kräften festgehalten wird.

6. Verfahren nach Anspruch 5, **dadurch gekennzeichnet, daß** die Freigabe des Rohteils durch Laufen des endlosen Förderbandes um eine konvexe Biegung mit kleinem Radius und in der Nähe von Mitteln für eine elektrostatische Entladung erfolgt.

7. Verfahren nach einem der Ansprüche 1 bis 6, **dadurch gekennzeichnet, daß** das Rohteil mindestens eine Polyurethanschicht umfaßt.

8. Verfahren nach Anspruch 6, **dadurch gekennzeichnet, daß** das Rohteil mindestens eine Polyurethanschicht mit energieabsorbierenden Eigenschaften und eine Polyurethanschicht mit Oberflächeneigenschaften, die sich mit dem endlosen Förderband in Berührung befindet, enthält, wobei die gegenüberliegende Schicht, welche mit dem Träger in Kontakt kommen soll, Hafteigenschaften mit dem Träger besitzt und diese Schicht diejenige mit den energieabsorbierenden Eigenschaften oder eine insbesondere aus thermoplastischem Polyurethan bestehende zusätzliche Haftschicht sein kann.

9. Verfahren nach einem der Ansprüche 1 bis 5, **dadurch gekennzeichnet, daß** der Träger aus Glas besteht.

10. Vorrichtung zum Verbinden eines Kunststoffrohteils (15) mit einem Träger (11), insbesondere einem starren Träger, durch Kalandrieren, **dadurch gekennzeichnet, daß** sie einen Kalander (1), der obere Preßmittel (5) und untere Preßmittel (4), die zusammen eine Preßachse bilden, enthält, einen in Durchlaufrichtung hinteren Förderer (9), der den zu beschichtenden Träger zum Kalander bringt, ein endloses Förderband (16), welches das Rohteil vor der Preßachse entsprechend dessen Fortbewegung in der Preßachse auf den zu beschichtenden Träger bringt, Mittel, die das Festhalten des Rohteils im Kontakt mit dem endlosen Förderband sicherstellen, um es bis zum Kalander zu transportieren, Mittel (20) zur Freigabe des Rohteils unmittelbar vor der Preßachse und einen vorderen Förderer (13) zur Abnahme des Verbunds am Ausgang des Kalanders umfaßt.

11. Vorrichtung nach Anspruch 10, **dadurch gekennzeichnet, daß** sie Mittel (24) umfaßt, die in der Lage sind, zwischen dem endlosen Förderband und dem Rohteil, das es zu transportieren hat, elektrostatische Haftkräfte zu erzeugen.

12. Vorrichtung nach Anspruch 11, **dadurch gekennzeichnet, daß** die Mittel, welche in der Lage sind, elektrostatische Haftkräfte zu erzeugen, eine Ladungselektrode (24) umfassen.

13. Vorrichtung nach Anspruch 11 oder 12, **dadurch gekennzeichnet, daß** die Mittel zur Freigabe des Rohteils unmittelbar vor der Preßachse eine konvexe Biegung mit kleinem Radius umfassen, um welche das endlose Förderband läuft.

14. Vorrichtung nach Anspruch 13, **dadurch gekennzeichnet, daß** die konvexe Biegung einen Radius besitzt, der kleiner als 10 mm und vorzugsweise kleiner als 5 mm ist.

15. Vorrichtung nach Anspruch 13 oder 14, **dadurch gekennzeichnet, daß** die konvexe Biegung von der Grundfläche eines V-förmigen metallischen Führungsteils (21) bereitgestellt wird.

16. Vorrichtung nach Anspruch 15, **dadurch gekennzeichnet, daß** das metallische Führungsteil (21) elektrisch entladen wird, da es geerdet ist.
